# EUROPEAN PATENT APPLICATION

(11) **EP 4 779 593 A1**
(43) Date of publication of application: **22.07.2026**
(21) Application number: 25152247.0
(22) Date of filing: 16.01.2025
(51) Int. Cl.: G06V 20/58

(54) **METHOD FOR DETERMINING A DRIVEABLE ZONE FOR A VEHICLE, METHOD FOR CONTROLLING A VEHICLE, DATA PROCESSING APPARATUS, VEHICLE, COMPUTER PROGRAM, AND COMPUTER-READABLE STORAGE MEDIUM**

(71) Applicant: Volvo Car Corporation, 405 31 Göteborg (SE)
(72) Inventor: LINDBERG, Andreas, 40531 Göteborg (SE); FORSMAN, Oscar, 40531 Göteborg (SE); RODRIGUEZ ALCÁZAR, Alejandro, 40531 Göteborg (SE); ROCHA, João, 40531 Göteborg (SE); GORE, Chaitanya Devidas, 40531 Göteborg (SE)
(74) Representative: Kransell & Wennborg KB

(57) **Abstract**

The disclosure relates to a method for determining a driveable zone (12) for a vehicle (10). The method comprises obtaining first data indicative of a surrounding of the vehicle (10) and obtaining second data indicative of a surrounding of the vehicle (10). The first data is based on first sensor data from a sensor of a first type. The second data is based on second sensor data from a sensor of a second type. The method further comprises obtaining third data based on the first data and the second data. The third data is indicative of a grid map comprising a plurality of grid cells. At least one of the plurality of grid cells is indicated as driveable or non-driveable. Additionally, the method comprises obtaining fourth data based on the third data. The fourth data is indicative of a polygon (68) at least partially delimiting the driveable zone (12). Furthermore, a method for controlling a vehicle (10), a data processing apparatus, a vehicle (10), a computer program, and a computer-readable storage medium are presented.

## Description

### TECHNICAL FIELD

The present disclosure relates to a method for determining a driveable zone for a vehicle.

Moreover, the present disclosure is directed to a method for controlling a vehicle.

Additionally, the present disclosure relates to a data processing apparatus, a computer program, and a computer-readable storage medium.

Furthermore, the present disclosure is directed to a vehicle.

### BACKGROUND ART

Recent developments in the field of driver assistance systems show that overlooking the surroundings of a vehicle is important. In more detail, identifying obstacles in the surroundings is essential for enabling a reliable operation of a driver assistance system. Especially in rearward driving scenarios, a user of the vehicle often relies on driver assistance systems to avoid collisions with objects located behind the vehicle.

### SUMMARY

It is therefore an objective of the present disclosure to improve an accuracy of a determined driveable zone for a vehicle. Thereby, vehicle safety shall be enhanced.

The problem is at least partially solved or alleviated by the subject matter of the independent claims of the present disclosure, wherein further examples are incorporated in the dependent claims.

According to a first aspect, there is provided a method for determining a driveable zone for a vehicle. The method comprises:
SE:TOP
- obtaining first data indicative of a surrounding of the vehicle, wherein the first data is based on first sensor data from a sensor of a first type,
- obtaining second data indicative of a surrounding of the vehicle, wherein the second data is based on second sensor data from a sensor of a second type,
- obtaining third data based on the first data and the second data, the third data being indicative of a grid map comprising a plurality of grid cells, wherein at least one of the plurality of grid cells is indicated as driveable or non-driveable, and
- obtaining fourth data based on the third data, wherein the fourth data is indicative of a polygon at least partially delimiting the driveable zone.

It is to be noted that the sensor of the first type differs from the sensor of the second type. In other words, the sensor of the first type and the sensor of the second type are based on different sensor technologies. However, the sensor of the first type and the sensor of the second type both are configured to provide data indicative of the same surrounding of the vehicle. Thus, the driveable zone is determined within a zone that is covered by both the field of detection of the sensor of the first type and the field of detection of the sensor of the second type. Both the first data and the second data are used for obtaining the third data. Thus, both the first data and the second data may be used in synergy such that potentially false or imprecise data originating from one of the sensor of the first type or the sensor of the second type may be compensated. The step of obtaining third data may as well be described as fusing the first data and the second data. This covers two options. Either both the first data and the second data are indicative of a grid map and these grid maps are fused in order to form the third data which are indicative of a fused grid map. Alternatively, the first data and the second data are not in the form of grid maps. In this alternative, the first data and the second data are fused and the result of the data fusion is represented as a grid map. In this context, a grid map is a way of representing the surroundings of the vehicle, wherein the representation of the surroundings is subdivided into a plurality of grid cells. For each grid cell, one may determine whether it represents a driveable portion of the surroundings or a non-driveable portion of the surroundings. This means that the third data which is indicative of a grid map may represent the surroundings in an accurate manner. According to the method of the present disclosure, fourth data are obtained based on the third data, wherein the fourth data are indicative of a polygon. In other words, the representation of the surroundings is first provided as a grid map. Based thereon, the surroundings, more precisely a driveable zone of the surroundings, is described using a polygon. The polygon may form the boundary between the driveable portion of the surroundings and the non-driveable portion of the surroundings. Using a polygon is both accurate and efficient with respect to the usage of memory and required computing. This has the effect that the accuracy of the determined driveable zone is improved. Moreover, by improving the accuracy, the vehicle safety is enhanced.

In an example, the driveable zone corresponds to a road surface, a parking surface, or any surface, where the vehicle can drive on. In the same manner, a non-driveable zone is a surface on which the vehicle may not or must not drive.

According to an example of the present disclosure, a very simple way of fusing the first data and the second data may comprise determining the presence of an obstacle, i.e. a non-driveable portion of the surroundings of the vehicle, if both the first data and the second data are indicative of an obstacle. Accordingly, an absence of an obstacle, i.e. a driveable portion of the surroundings of the vehicle may be determined if both the first data and the second data are indicative of an absence of an obstacle. For portions of the surroundings for which one of the first data and the second data is indicative of an obstacle and the other one of the first data and the second data is not, there are three alternatives. Either these portions of the surroundings are considered to comprise an obstacle. This would mean that the data indicative of an absence of the obstacle would be considered as erroneous. Alternatively, these portions of the surroundings are considered not to comprise an obstacle. This would mean that the data indicative of a presence of the obstacle would be considered as erroneous. Further alternatively, the all data relating to these portions of the surroundings may be ignored. One of these alternatives may be chosen based on the specific application scenario for which the method is used.

According to an example, the first data comprises image data indicative of the surroundings of the vehicle. Additionally or alternatively, the second data comprises ultrasound data indicative of the surroundings of the vehicle. This means that the sensor of the first type may be a vision sensor configured to provided image data. In an example, the sensor of the first type is an optical camera. Additionally or alternatively, the sensor of the second type may be an ultrasonic sensor. The sensor of the first type and the sensor of the second type may have different sensor ranges which are configured to capture at least partly the same portion of the surroundings of the vehicle. Thus, for determining the driveable zone, image data and ultrasound data may be used as a basis. This has the effect that the accuracy of the determination of the driveable zone may be further improved. This is due to the different types of data originating from different types of sensors. Thus, the different types of sensors are able to detect different environmental phenomena and, thus, provide different types of information of the surrounding of the vehicle.

According to an example, the first data is indicative of a grid map comprising a plurality of grid cells. At least one of the plurality of grid cells is indicated as driveable or non-driveable. Additionally or alternatively, the second data is indicative of a grid map comprising a plurality of grid cells. At least one of the plurality of grid cells is indicated as driveable or non-driveable. This means that the grid map of the first data and the grid map of the second data are used to obtain the third data indicative of a grid map. In other words, the grid map of the first data and the grid map of the second data are fused. This is computationally efficient. Thus, the third data may be obtained in a straightforward manner. Therefore, the third data comprising the plurality of grid cells indicated as driveable or non driveable may be accurate. This has the effect that the accuracy of the determination of the driveable zone may be further improved.

According to an example, obtaining the first data comprises applying a first detection model in conjunction with the first sensor data. Additionally or alternatively, obtaining the second data comprises applying a second detection model in conjunction with the second sensor data. The first detection model and/or the second detection model may be a pre-trained model. In an example, the model may comprise a pre-trained artificial neural network Thus, by using such detection models, objects surrounding the vehicle may be detected quickly and precisely. In an example, a surrounding object is another road user, such as a vehicle, a person or any other object that would cause a collision. In another example, the surrounding object is a road surface made of concrete or asphalt, tall grass or any other road surface that would not cause a collision. Therefore, by using a first detection model and/or a second detection model, the reliability of the determination of the fourth data indicative of the polygon at least partially delimiting the driveable zone may be further enhanced. This has the effect that the accuracy of the determination of the driveable zone may be further improved.

In an example the sensor of the first type is a vision sensor. This means that the first detection model is a vision model. Also in this case, the first detection model may comprise an artificial neural network.

According to an example, obtaining the first data comprises applying an object recognition technique and/or an object classification technique on the first sensor data. Additionally or alternatively, obtaining the second data comprises applying an object recognition technique and/or an object classification technique on the second sensor data. Thus, by applying an object recognition technique and/or an object classification technique, objects surrounding the vehicle may be recognized and/or classified. As has been mentioned before, a surrounding object may be another road user, such as a vehicle, a person or any other object that would cause a collision. Recognizing and/or classifying the representations of such objects in the first sensor data and/or the second sensor data may be computationally efficient, i.e. quick, and reliable. In another example, the surrounding object may be a road surface made of concrete or asphalt, tall grass or any other road surface that would not cause a collision. Different road surface properties may be classified as drivable or non-drivable. Therefore, by applying an object recognition technique and/or an object classification technique, the reliability of the polygon at least partially delimiting the driveable zone may be further enhanced. This has the effect that the accuracy of the driveable zone estimation may be further improved.

According to an example, obtaining the third data comprises cross-verifying at least one item of the first data and at least one item of the second data. Cross-verifying means an item of the first data and an item of the second data are compared, wherein the idem of the first data and the item of the second data represent the same portion or neighboring portions of the surroundings of the vehicle. Based on this comparison, a plausibility check may be performed such that errors in the third data may be avoided. According to an option, priorities may be associated with the at least one item of the first data and the at least one item of the second data. Thus, during a cross-verification, more weight may be given to the item of data having the higher priority. The priority may for example depend on a distance from the vehicle. This means that the items of the second data may have a higher priority than the items of the first data if associated with a portion of the surroundings located relatively close to the vehicle. If the portion of the surroundings is located relatively remote from the vehicle, the items of the first data may have a higher priority than the items of the second data. Altogether, cross-verifying at least one item of the first data and at least one item of the second data enhances the precision and reliability of the third data.

According to an example, obtaining the fourth data comprises associating a vertex of the polygon with at least one grid cell of the third data. Thus, a vertex of the polygon may be derived from each grid cell. In this context, the vertex may be a diagonal line extending through the associated grid cell. Alternatively, the vertex may be a portion of a boundary of the associated grid cell. Further alternatively, the vertex may extend through the associated grid cell. Thus, the polygon may be determined in a comparatively simple and accurate manner. This has the effect that the accuracy of the driveable zone is improved.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a method for controlling a vehicle. The method comprises:
- determining a driveable zone for the vehicle using the method according to the first aspect, and
- obtaining a travel path based on the driveable zone and/or causing a collision avoidance maneuver based on the driveable zone.

The travel path may be understood as a path where no collisions are likely to occur and the vehicle may be able to drive on. In an example, the travel path is indicative of a corridor where the road is made of concrete and no objects are located that may cause a collision. The collision avoidance maneuver may be seen as a driving maneuver executed in order to avoid a collision. Thus, a drive system of the vehicle is controlled such that the vehicle does not collide with an object in its surroundings. The drive system may comprise a steering system, a brake system, and/or a warning system. Using the steering system, the vehicle may be guide on a path that avoids the collision. Using the brake system, the vehicle may be caused to stop before the collision happens. In an example the collision avoidance maneuver comprises warning the vehicle user acoustically, visually, and/or haptically. It is also possible to issue a warning to the surroundings of the vehicle. By obtaining the travel path and/or causing the collision avoidance maneuver, the vehicle safety is enhanced.

According to an example, causing the collision avoidance maneuver comprises causing brake engagement. This means that the brake system may be activated automatically. In an example, the collision avoidance maneuver is caused when the vehicle is located too close to an object that may cause a collision. This has the effect that the vehicle safety is further enhanced.

According to an example, the driveable zone is located rearwards with respect to the vehicle. More precisely, the driveable zone is located behind the vehicle with respect to a standard forward driving direction of the vehicle. When driving backwards, a vehicle user may see less from the surroundings of the vehicle. This is especially the case when considering driving in a forward direction. Thus, by determining the driveable zone rearwards, the vehicle safety is further improved.

According to a third aspect, there is provided a data processing apparatus. The data processing apparatus comprises means for carrying out the method of the first aspect and/or the method of the second aspect. This covers three alternatives. In a first alternative, the data processing apparatus comprises means for carrying out the method of the first aspect. In a second alternative, the data processing apparatus comprises means for carrying out the method of the second aspect. In a third alternative, the data processing apparatus comprises means for carrying out both the method of the first aspect and the method of the second aspect. Thus, using the data processing apparatus according to the present disclosure, the determination of the driveable zone is enhanced. As has been mentioned above, the first data and the second data originate from sensors of different types. Thus, the accuracy of the determined driveable zone may be improved. Moreover, vehicle safety is enhanced due to the improved determination of a driveable zone.

According to a fourth aspect, there is provided a vehicle. The vehicle comprises a data processing apparatus according to the third aspect, a sensor of a first type, and a sensor of a second type. The sensor of the first type and the sensor of the second type are communicatively connected to the data processing apparatus. The data processing apparatus is communicatively connectable to a drive system of the vehicle, e.g. a brake system. As has been mentioned above, the first data and the second data originate from sensors of different types. Thus, the accuracy of the determined driveable zone may be improved. Moreover, vehicle safety is enhanced due to the improved determination of a driveable zone.

According to an example, one of the sensor of the first type and the sensor of the second type is an optical camera and the respective other one of the sensor of the first type and the sensor of the second type is an ultrasonic sensor. This means that one of the first data and the second data may comprise image data indicative of the surroundings of the vehicle and the respective other one of the first data and the second data may comprise ultrasound data indicative of the surroundings of the vehicle. Thus, for determining the driveable zone, image data and ultrasound data may be used as a basis. In more detail, the different types of data originate from different types of sensors. Thus, the different types of sensors are able to detect different environmental phenomena and, thus, provide different types of information of the surrounding of the vehicle. This has the effect that the accuracy of the determined driveable zone is further improved.

According to a fifth aspect, there is provided a computer program comprising instructions which, when the computer program is executed by a computer, cause the computer to carry out the method of the first aspect and/or the method of the second aspect. This covers three alternatives. In a first alternative, the computer program comprises instructions which, when the computer program is executed by a computer, cause the computer to carry out the method of the first aspect. In a second alternative, the computer program comprises instructions which, when the computer program is executed by a computer, cause the computer to carry out the method of the second aspect. In a third alternative, the computer program comprises both instructions which, when the computer program is executed by a computer, cause the computer to carry out the method of the first aspect and instructions which, when the computer program is executed by a computer, cause the computer to carry out the method of the second aspect. Thus, using the computer program according to the present disclosure, the determination of the driveable zone is enhanced. As has been mentioned above, the first data and the second data originate from sensors of different types. Thus, the accuracy of the determined driveable zone may be improved. Moreover, vehicle safety is enhanced due to the improved determination of a driveable zone.

According to a sixth aspect, there is provided a computer-readable storage medium comprising instructions which, when executed by a computer, cause the computer to carry out the method of the first aspect and/or the method of the second aspect. This covers three alternatives. In a first alternative, the computer-readable storage medium comprises instructions which, when executed by a computer, cause the computer to carry out the method of the first aspect. In a second alternative, the computer-readable storage medium comprises instructions which, when executed by a computer, cause the computer to carry out the method of the second aspect. In a third alternative, the computer-readable storage medium comprises both instructions which, when executed by a computer, cause the computer to carry out the method of the first aspect and instructions which, when executed by a computer, cause the computer to carry out the method of the second aspect. Thus, using the computer-readable storage medium according to the present disclosure, the determination of the driveable zone is enhanced. As has been mentioned above, the first data and the second data originate from sensors of different types. Thus, the accuracy of the determined driveable zone may be improved. Moreover, vehicle safety is enhanced due to the improved determination of a driveable zone.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a data processing apparatus according to the present disclosure, wherein the data processing apparatus comprises means for carrying out a method according to the present disclosure for controlling a vehicle and a method according to the present disclosure for determining a driveable zone,
- Figure 2: shows an example of a representation of a sub-section of the surroundings of the vehicle and a field of view of an optical camera,
- Figure 3: shows the representation of the sub-section of the surroundings of the vehicle and the field of view of the optical camera of Figure 2, wherein sub-sections are represented as a grid map,
- Figure 4: shows an example of a representation of the same sub-section of the surroundings of the vehicle as in Figure 2 and a field of view of an ultrasonic sensor,
- Figure 5: shows the representation of the sub-section of the surroundings of the vehicle and the field of view of the ultrasonic sensor of Figure 4, wherein the sub-section is represented as a grid map,
- Figure 6: shows a grid map based on the grid map of Figure 3 and on the grid map of Figure 5,
- Figure 7: shows a polygon partially delimiting the driveable zone, wherein the polygon is based on the grid map of Figure 6,
- Figure 8: shows another example of a polygon partially delimiting the driveable zone, and
- Figure 9: illustrates steps of the method according to the present disclosure for controlling a vehicle and of the method according to the present disclosure for determining a driveable zone.

### DETAILED DESCRIPTION

The Figures are merely schematic representations and serve only to illustrate examples of the disclosure. Identical or equivalent elements are in principle provided with the same reference signs.

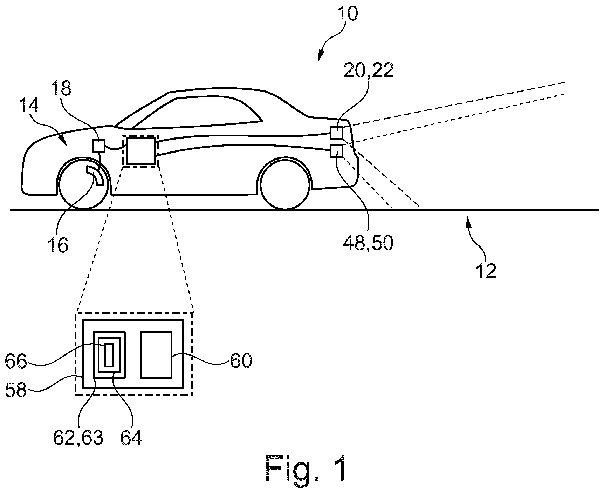

Figure 1 shows a vehicle 10 located in a driveable zone 12. In the present example, the driveable zone 12 is located rearwards with respect to the vehicle 10.

The vehicle 10 comprises a brake system 14 being represented by a single brake caliper 16 associated with a front wheel of the vehicle 10 and a brake cylinder 18.

The vehicle 10 further comprises a sensor 20 of a first type. In the present example, the sensor 20 of the first type is an optical camera 22. The optical camera 22 is configured to provide first data 24. Thus, the first data 24 comprises image data 26 representing surroundings 28 of the vehicle 10.

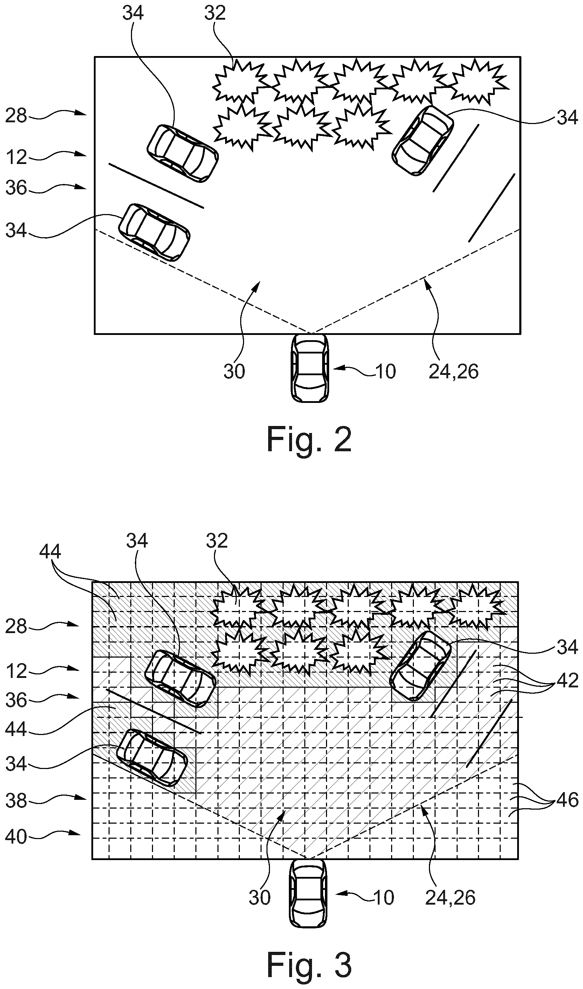

Figure 2 shows a representation of a sub-section of the surroundings 28 of the vehicle 10 and a field of view 30 of the optical camera 22. The surroundings 28 of the vehicle 10 comprises eight bushes 32 and three parked vehicles 34 on a parking surface 36 made of concrete.

In the present example, the first data 24 is indicative of a grid map 38, which comprises a plurality of grid cells 40. Each of the plurality of grid cells 40 is indicated as driveable or non-driveable (see Figure 3). In more detail, a plurality of grid cells 40 is indicated as driveable grid cells 42 and a plurality of grid cells 40 is indicated as non-driveable grid cells 44. It is to be understood that the plurality of grid cells 40 located outside of the field of view 30 of the optical camera 22 may be seen as neutral cells 46. This means that for these grid cells 46, it has not been determined whether they are driveable or non-driveable.

The vehicle 10 further comprises a sensor 48 of a second type. In the present example, the sensor 48 of the second type is an ultrasonic sensor 50. The ultrasonic sensor 50 is configured to provide second data 52. The second data 52 comprises ultrasound data 54 representing the surroundings 28 of the vehicle 10.

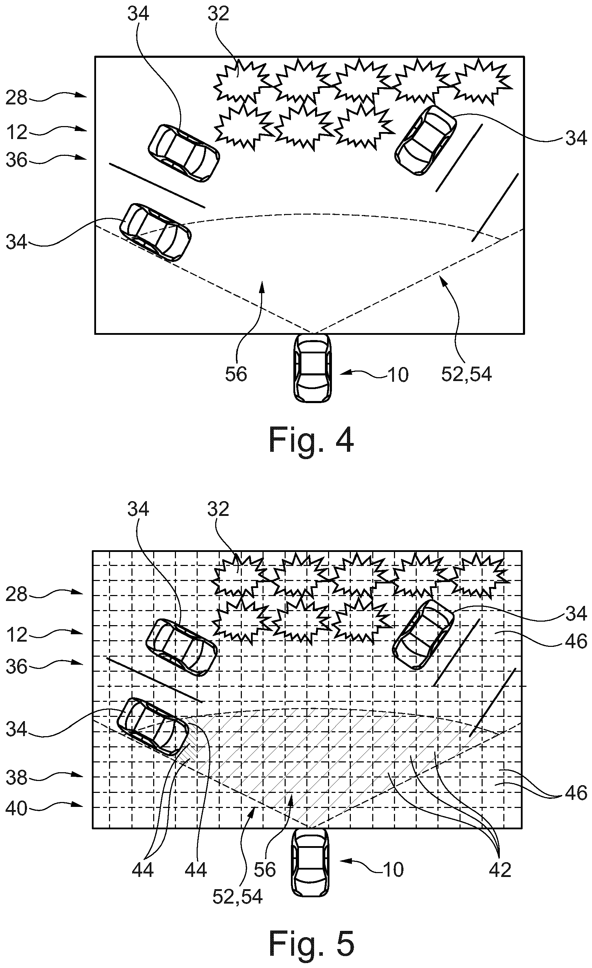

Figure 4 shows a representation of the same sub-section of the surroundings 28 of the vehicle 10 as in Figure 2 and a field of view 56 of the ultrasonic sensor 50.

It is to be noted that in the present example, the ultrasonic sensor 50 has a smaller sensor range than the optical camera 22 (cf. also Figure 2).

In the present example, the second data 52 is indicative of a grid map 38, which comprises a plurality of grid cells 40, wherein each of the plurality of grid cells 40 is indicated as driveable or non-driveable (see Figure 5). In more detail, a plurality of grid cells 40 are indicated as driveable grid cells 42 and a plurality of grid cells 40 are indicated as non-driveable grid cells 44. It is to be understood that the plurality of grid cells 40 located outside of the field of view 56 of the ultrasonic sensor 50 may be seen as neutral cells 46. This means that for these grid cells 46, it has not been determined whether they are driveable or non-driveable.

It is noted that the optical camera 22 and the ultrasonic sensor 50 are positioned on the vehicle 10 to capture at least partly the same surroundings 28 of the vehicle 10.

Coming back to Figure 1, the vehicle 10 further comprises a data processing apparatus 58.

The data processing apparatus 58 comprises a data processing unit 60 and a data storage unit 62.

The data storage unit 62 comprises a computer-readable storage medium 64. On the computer-readable storage medium 64, there is provided a computer program 66.

The computer program 66 and, thus, also the computer-readable storage medium 64, comprise instructions which, when executed by the data processing unit 60, or, more generally speaking, a computer, cause the computer or the data processing unit 60 to carry out a method for controlling a vehicle 10.

Consequently, the data storage unit 62 and the data processing unit 60 form means for carrying out the method for controlling the vehicle 10.

The optical camera 22, the ultrasonic sensor 50 and the brake system 14 are communicatively connected to the data processing apparatus 58.

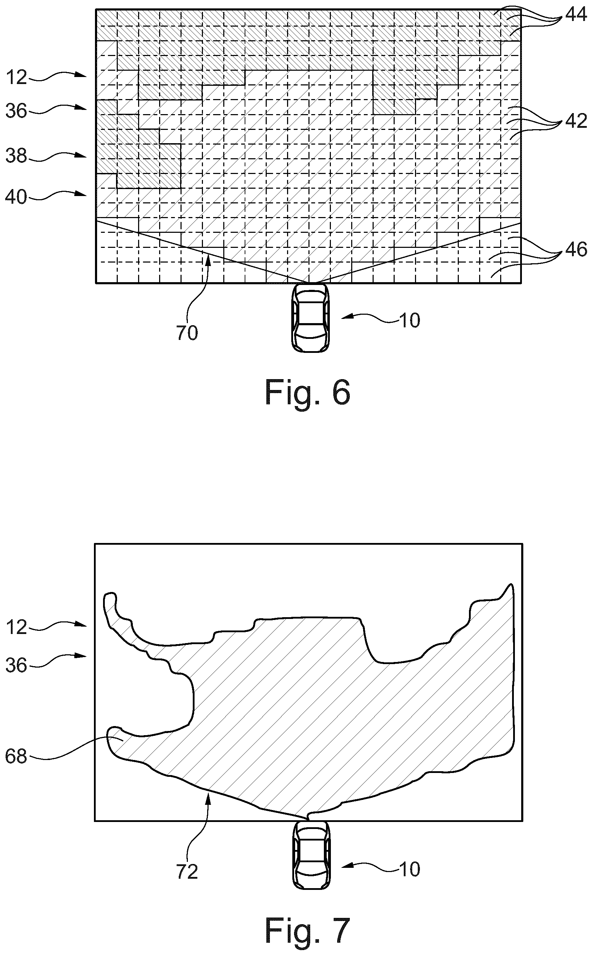

Figure 6 shows a grid map 38 based on the grid map of Figure 3 and on the grid map of Figure 5. This representation comprises a plurality of grid cells 40. A plurality of grid cells 40 is indicated as driveable grid cells 42 and a plurality of grid cells 40 is indicated as non-driveable grid cells 44. It is to be understood that the plurality of grid cells 40 located outside of the field of view 30 of the optical camera 22 and outside of the field of view 56 of the ultrasonic sensor 50 may be seen as neutral cells 46.

Based on the grid map 38 of Figure 6, a polygon 68 partially delimiting the driveable zone 12 is depicted in Figure 7. In other words, the driveable zone 12 corresponds to the portion of the parking surface 36, where the vehicle 10 can potentially drive without colliding with at least one of the parked vehicles 34 and/or with at least one of the bushes 32.

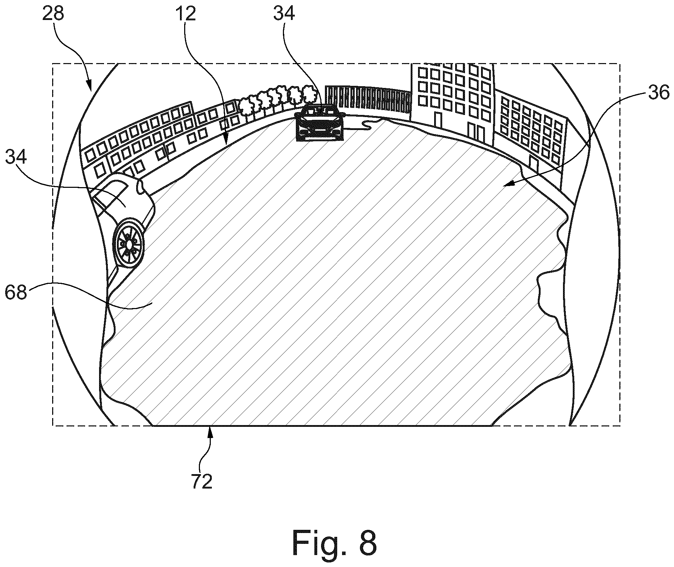

Figure 8 shows another example of a representation of a sub-section of the surroundings 28 of the vehicle 10 and a polygon 68 partially delimiting the driveable zone 12. Also in this example, the polygon 68 has been determined based on the image data 26 and based on the ultrasound data 54.

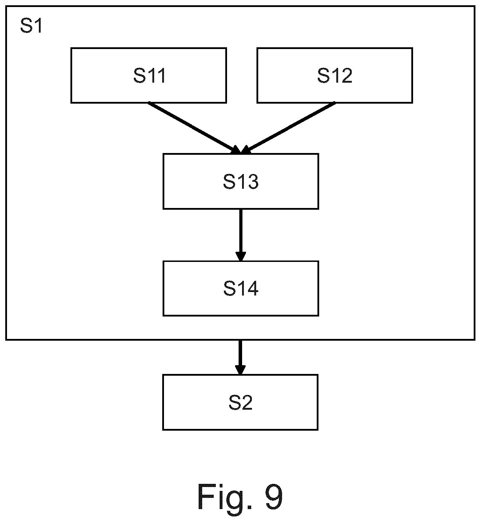

In the following, the method for controlling the vehicle 10 will be explained in more detail (cf. Figure 9).

In a first step S1 of the method for controlling the vehicle 10, the driveable zone 12 is determined. In this first step S 1, a method for determining the driveable zone 12 is executed.

The method for determining the driveable zone 12 comprises a total of four steps S 11, S12, S13, and S 14. In the following, the steps of the method for determining the driveable zone 12 will be designated with reference signs S1x in order to distinguish these steps over the steps of the method for controlling the vehicle 10, which are designated with reference sings Sy.

In a first step S11 of the method, first data 24 is obtained, wherein the first data 24 originates from the optical camera 22.

In other words, in the first step S11 of the method, image data 26 is obtained.

Moreover, obtaining the first data 24, i.e. the image data 26, further comprises applying an object recognition technique and an object classification technique on the image data 26. This means that the objects represented in the image data 26 are recognized and classified. Due to the object recognition technique, the representation of the parked vehicles 34 may be recognized as vehicles and the representation of the bushes 32 may be recognized as plants. The classification may, for example, relate to the fact whether the recognized objects are deformable or not. Thus, the representations of the bushes 32 may be classified as deformable, wherein the parked vehicles 34 may be recognized as non-deformable. This is helpful since a driving maneuver might allow a certain contact with deformable objects, wherein a contact with non-deformable objects might be strictly avoided.

The object recognition technique and the object classification technique may involve using a detection model, e.g. comprising a trained artificial neural network.

Based on the recognized and classified objects, a grid map 38 may be generated. In other words, the image data and the results of an associated image processing may be represented in the form of a grid map 38.

Thus, the first data 24 is indicative of a grid map 38 comprising a plurality of grid cells 40. In other words, the first data 26 have the form of a grid map 38. A portion of the plurality of grid cells 40 is indicated as driveable. Another portion of the grid cells 40 is indicated as non-driveable.

In a second step S12 of the method, second data 52 is obtained, wherein the second data 52 originates from the ultrasonic sensor 50.

In other words, in the second step S12 of the method, ultrasound data 54 is obtained.

Moreover, obtaining the second data 52, i.e. the ultrasound data 54, further comprises applying an object recognition technique and an object classification technique on the ultrasound data 54. This means that the objects represented in the ultrasound data 54 are recognized and classified. Due to the object recognition technique, the representation of the parked vehicles 34 may be recognized as vehicles and the representation of the bushes 32 may be recognized as plants. The classification may, for example, relate to the fact whether the recognized objects are deformable or not. Thus, the representations of the bushes 32 may be classified as deformable, wherein the parked vehicles 34 may be recognized as non-deformable. This is helpful since a driving maneuver might allow a certain contact with deformable objects, wherein a contact with non-deformable objects might be strictly avoided.

The object recognition technique and the object classification technique may involve using a detection model, e.g. comprising a trained artificial neural network.

Based on the recognized and classified objects, a grid map 38 may be generated. In other words, the ultrasound data and the results of an associated ultrasound data processing may be represented in the form of a grid map 38.

Thus, the second data 52 is indicative of a grid map 38 comprising a plurality of grid cells 40. In other words, the second data 52 have the form of a grid map 38. A portion of the plurality of grid cells 40 is indicated as driveable. Another portion of the grid cells 40 is indicated as non-driveable.

In a third step S13 of the method, third data 70 is obtained that is based on the first data 24, i.e. on the image data 26, and on the second data 52, i.e. on the ultrasound data 54. The third data 70 is indicative of a grid map 38 comprising a plurality of grid cells 40. A portion of the plurality of grid cells 40 is indicated as driveable and another portion of the grid cells 40 is indicated as non-driveable.

In other words, the first data 24 and the second data 52 are fused. Since both the first data 24 and the second data 52 have the form of a grid map 38, this means that the grid map 38 if the first data 24 and the grid map 38 of the second data 52 are fused.

Moreover, obtaining the third data 70 comprises cross-verifying at least one item of the image data 26 and at least one item of the ultrasound data 54. Thus, erroneous items of the image data 26 and/or erroneous items of the ultrasound data 54 may be ignored.

In a fourth step S14 of the method, fourth data 72 is obtained that is based on the third data 70. The fourth data 72 is indicative of the polygon 68 partially delimiting the driveable zone 12. In other words, the third data 70, i.e. the grid map 38 of the third data 70 is used to generate the polygon 68.

In more detail, obtaining the fourth data 72 comprises associating a vertex of the polygon 68 with the plurality of grid cells 40 of the third data 70. This means that each grid cell 40 located at the borderline of the driveable zone 12 defines a vertex, e.g. extending through this grid cell 40. All vertexes defined by all grid cells located at the borderline of the driveable zone 12 together define the polygon 68.

Thus, the polygon 68 delimits the driveable zone 12 with respect to a non-driveable zone.

In a second step S2 of the method for controlling the vehicle 10, a travel path (not shown) is obtained based on the driveable zone 12. This means that a travel path is generated based on the description of the driveable zone 12. This travel path is determined such that the vehicle stays within the driveable zone 12.

If necessary, i.e. if a collision cannot be avoided otherwise, a collision avoidance maneuver may be caused based on the driveable zone 12. In the present example, causing the collision avoidance maneuver comprises automatically causing a brake engagement. In other words, the brake system 14 is activated automatically. This may be the case if otherwise the vehicle would leave the driveable zone 12.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: driveable zone
- 14: brake system
- 16: brake caliper
- 18: brake cylinder
- 20: sensor of a first type
- 22: optical camera
- 24: first data
- 26: image data
- 28: surrounding of the vehicle
- 30: field of view of the optical camera
- 32: bush
- 34: parked vehicle
- 36: parking surface
- 38: grid map
- 40: plurality of grid cells
- 42: driveable grid cells
- 44: non-driveable grid cells
- 46: neutral cells
- 48: sensor of a second type
- 50: ultrasonic sensor
- 52: second data
- 54: ultrasound data
- 56: field of view of the ultrasonic sensor
- 58: data processing apparatus
- 60: data processing unit
- 62: data storage unit
- 63: means for carrying out the method for controlling a vehicle
- 64: computer-readable storage medium
- 66: computer program
- 68: polygon
- 70: third data
- 72: fourth data

- S1: first step of the method for controlling a vehicle
- S2: second step of the method for controlling a vehicle
- S11: first step of the method for determining a driveable zone for a vehicle
- S12: second step of the method for determining a driveable zone for a vehicle
- S13: third step of the method for determining a driveable zone for a vehicle
- S14: fourth step of the method for determining a driveable zone for a vehicle

## Claims

1. A method for determining a driveable zone (12) for a vehicle (10), the method comprising:
- obtaining first data (24) indicative of a surrounding (28) of the vehicle (10), wherein the first data (24) is based on first sensor data from a sensor (20) of a first type,
- obtaining second data (52) indicative of a surrounding (28) of the vehicle (10), wherein the second data (52) is based on second sensor data from a sensor (48) of a second type,
- obtaining third data (70) based on the first data (24) and the second data (52), the third data (70) being indicative of a grid map (38) comprising a plurality of grid cells (40), wherein at least one of the plurality of grid cells (40) is indicated as driveable or non-driveable, and
- obtaining fourth data (72) based on the third data (70), wherein the fourth data (72) is indicative of a polygon (68) at least partially delimiting the driveable zone (12).

2. The method of claim 1, wherein the first data (24) comprises image data (26) indicative of the surroundings (28) of the vehicle (10) and/or wherein the second data (52) comprises ultrasound data (54) indicative of the surroundings (28) of the vehicle (10).

3. The method of claim 1 or 2, wherein the first data (24) is indicative of a grid map (38) comprising a plurality of grid cells (40), wherein at least one of the plurality of grid cells (40) is indicated as driveable or non-driveable and/or wherein the second data (52) is indicative of a grid map (38) comprising a plurality of grid cells (40), wherein at least one of the plurality of grid cells (40) is indicated as driveable or non-driveable.

4. The method of any one of the preceding claims, wherein obtaining the first data (24) comprises applying a first detection model in conjunction with the first sensor data and/or wherein obtaining the second data (52) comprises applying a second detection model in conjunction with the second sensor data.

5. The method of any one of the preceding claims,
wherein obtaining the first data (24) comprises applying an object recognition technique and/or an object classification technique on the first sensor data and/or
wherein obtaining the second data (52) comprises applying an object recognition technique and/or an object classification technique on the second sensor data.

6. The method of any one of the preceding claims, wherein obtaining the third data (70) comprises cross-verifying at least one item of the first data (24) and at least one item of the second data (52).

7. The method of any one of the preceding claims, wherein obtaining the fourth data (72) comprises associating a vertex of the polygon (68) with at least one grid cell of the third data (70).

8. A method for controlling a vehicle (10), the method comprising:
- determining a driveable zone (12) for the vehicle (10) using the method according to any one of the preceding claims, and
- obtaining a travel path based on the driveable zone (12) and/or causing a collision avoidance maneuver based on the driveable zone (12).

9. The method of claim 8, wherein causing the collision avoidance maneuver comprises causing brake engagement.

10. The method of claim 8 or 9, wherein the driveable zone (12) is located rearwards with respect to the vehicle (10).

11. A data processing apparatus (58) comprising means for carrying out the method of any one of claims 1 to 7 and/or the method of any one of claims 8 to 10.

12. A vehicle (10) comprising a data processing apparatus (58) according to claim 11, a sensor (20) of a first type, and a sensor (48) of a second type, wherein the sensor (20) of the first type and the sensor (48) of the second type are communicatively connected to the data processing apparatus (58).

13. The vehicle (10) of claim 12, wherein one of the sensor (20) of the first type and the sensor (48) of the second type is an optical camera (22) and the respective other one of the sensor (20) of the first type and the sensor (48) of the second type is an ultrasonic sensor (50).

14. A computer program (66) comprising instructions which, when the computer program (66) is executed by a computer, cause the computer to carry out the method of any one of claims 1 to 7 and/or the method of any one of claims 8 to 10.

15. A computer-readable storage medium (64) comprising instructions which, when executed by a computer, cause the computer to carry out the method of any one of claims 1 to 7 and/or the method of any one of claims 8 to 10.
